Europäisches Patentamt

European Patent Office

Office européen des brevets

(11) Publication number: **0 094 352**
A2

(12) # EUROPEAN PATENT APPLICATION

(21) Application number: 83810194.7

(22) Date of filing: 09.05.83

(51) Int. Cl.³: **G 01 F 1/10**, G 01 F 1/115

(30) Priority: 10.05.82 CH 2878/82

(43) Date of publication of application: 16.11.83
Bulletin 83/46

(84) Designated Contracting States: **AT BE DE FR GB IT SE**

(71) Applicant: **Barbuti, Ottorino, Piazza Riscossa 16,
CH-6900 Lugano-Cassarate (CH)**

(72) Inventor: **Barbuti, Ottorino, Piazza Riscossa 16,
CH-6900 Lugano-Cassarate (CH)**

(74) Representative: **Baggiolini, Raimondo et al, Racheli &
Fiammenghi Via San Gottardo 15, CH-6900 Lugano (CH)**

(54) Flowmeter for liquids having an electrical data sensor and process for making it.

(57) The flowmeter described is made for measuring the flow rate of a liquid as a function of the number of rotations of a propeller with radial expansions and rotating with an axis parallel to the direction of the flow. The propeller transmits the data without any mechanical connection through the walls of its conduit which is a simple straight pipe. The propeller has a specific weight equal or close to that of the fluid in which it is immersed. The smallness of its mass and its condition of floating in the fluid to be measured broaden the band of linearity in a flow rate ratio of 1 to 100 by using only a mechanical dimension of the flowmeter. The precision remains constant for any inclination or direction of mounting and for both directions of the fluid.

The constructive simplicity and pronounced sensitivity to minimal flow rates makes it suitable to use a volumetric sensor for high-precision, low-cost calorimeters.

## Flowmeter for liquids having an electrical data sensor and process for making it.

In the patent "Dynamic calorimeter for fluids with an incorporated computer that is self-feeding and insensitive to the flux of external magneti fields, "filed 1/27/81, Application No. 495/81-0, the same inventor describes a dynamic calorimeter for fluids that uses a flowmeter which was briefly illustrated.

The invention describes the detailed construction features of a flowmeter which because of its particular characteristics can be used, besides for precision calorimeters, also simply as a volumetric data sensor with display of the total either close up or remotely.

Flowmeters, which have been used so far as volumetric meters of liquids flowing in a conduit, in most cases, water, do not aim at a very high precision in view of the low cost of the element being measured.

Greater precision is required in the case of measuring hot water, because of its more costly heat content. If the flowmeter is used as a component of a more complex instrument, such as the dynamic calorimeter, the required precision considerably increases since its measuring is one of the factors of a product whose result is figured in "energy consumption" which is reflected in a consumption cost with possible tax. For this latter purpose, hot water meters do not totally meet requirements since they are based on a mechanical solution deriving from the need to make a pin rotate perpendicularly to the direction of flow of the fluid, to bring outside the conduit the movement necessary to make the indicators turn. This need has forced known flowmeters to use various types of "fans" or "turbines" driven by simple or multiple tangential jets, with more or less complex mechanical solutions.

These solutions have several drawbacks: little sensitivity to small flow rates, limited field of linearity of the rotation number/flow rate diagram, high pressure losses at high flow rates, required level mounting, single-direction flow.

For these reasons, makers have been forced to make a large number of models that differ very widely to cover the range of nominal flow rates required by practice, in addition to the same number of models of equal nominal flow rates but suited for mounting in vertical pipes, therefore, with further mounting complications.

The flowmeter according to this invention or volumetric meter of moving fluids solves all of the above mentioned problems since it exhibits the following features: very simple, low-cost mechanical construction, linearity of the rotation number/flow rate diagram extended to minimum flow rate-maximum flow rate ratio from 1 to 100, insensitivity to reversal in the direction of the flow of the fluid, possibility of mounting the conduit as any slope, with any position going around the median axis, great sensitivity to minimum flow, negligible pressure losses.

All this is obtained by using as the stationary mechanism a straight piece of pipe without variations in the inside section and a rotating mechanism which has: the axis of rotation parallel to the lines of flow, reduced weight, cavitations in the material calculated to obtain a relative specific weigh equal or very close to that of the fluid to be measured, point supports on jewel bearings.

The flowmeter, object of the invention, is therefore characterized by a conduit consisting of a piece of pipe, preferably straight, within which a fan turns with its pin coaxial with the flow; the fan has a specific weight that is very close to or identical with that of the fluid to be measured so that it does not weigh heavy on the bearings that support the pin; means being provided to transmit to the outside of the pipe magnetic, electromagnetic, electric or optical pulses at each rotation of the fan.

The following description, given for a nonlimiting explanation, refers to the figures of the accompanying drawing.

Figure 1 shows a perspective view in section of a flowmeter for small and medium flow rates;

Figure 2 is an advantageous configuration of a rotor molded from thermoplastic;

Figure 3 represents a flanged stationary body suitable for large flow rates;

Figure 4 shows a construction solution of a rotor of plastic for high temperatures or light metal suitable for high flow rate flowmeters.

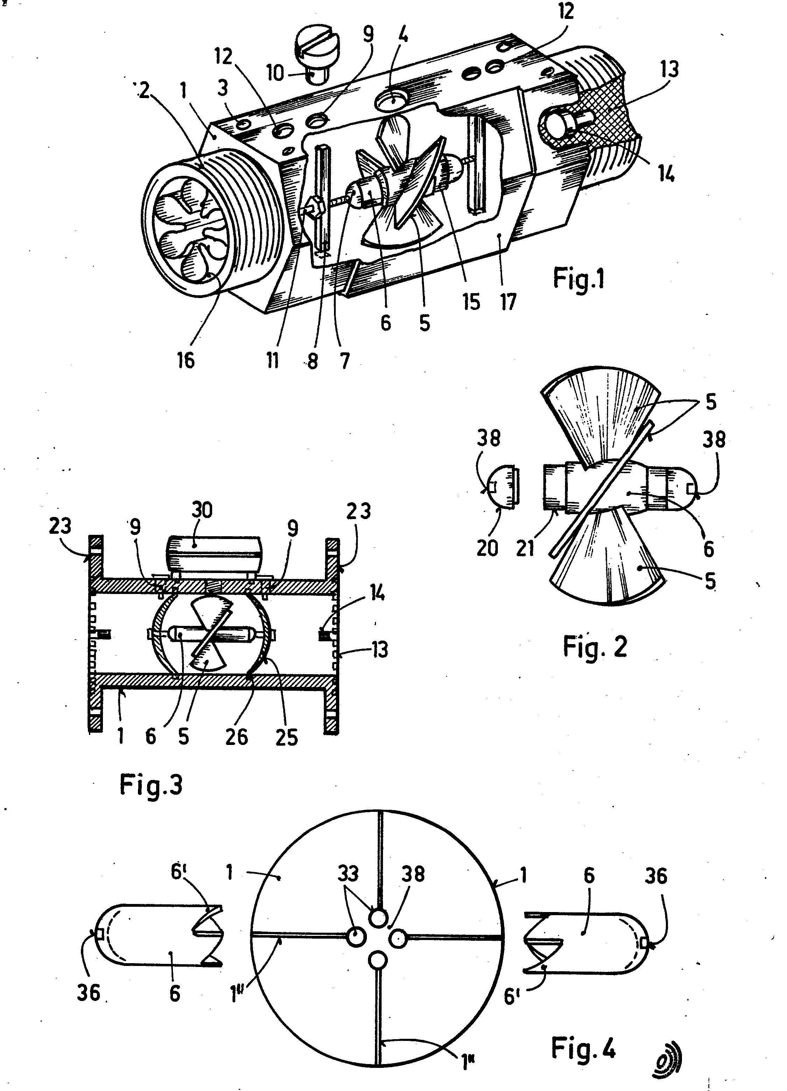

With reference to the various figures listed above: figure 1 indicates by 1 the static mechanical body consisting of a pipe provided with standard threads at its ends 2. The pipe is provided with hooks or threaded holes 3 and a cavity 4 in which the rotation number sensor is installed. Inside the pipe a very light propeller 5 having radial expansions inclined at a determined angle rotates with shaft 6 parallel to the direction of flow and resting by its two pointed ends on conical thrust bearings 7 of jewels (ruby, sapphire, etc.) supported in turn by rods 8, introduced in holes 9 and fitted into the bottom and held in place by fluid-tight screws 10. The bearings are placed at a distance micrometrically adjustable by a threaded adjustment screw 11. Other threaded holes 12 allow placing of possible pockets for probes for similar data (pressure, temperature, acidity, etc.). Pin 6 of the propeller is hollow with a recess of sufficient volume to make it assume the specific weight of the desired value, i.e., equal or very close to that of the liquid that goes through the flowmeter.

The bearings and points can be mounted indifferently on the pin of the propeller and on the rods or vice versa depending on the convenience in construction because of the material from which the propeller is made.

The ends of pipe 1 are closed by a filtering net 13 or flat filtering body that is more complex as a function of the density and type of fluid in circulation. For simplicity, only one is shown in the figure and on each, at the center, is mounted a powerful permanent magnet 14 constituting the magnetic filter for iron particles suspended in the fluid in case the expansions of the propeller carry small magnets 15 as the electric pulse transmitters.

Over about 1/5 of the total length, the pipe section is occupied at each end by a thin plate 16 undulated and bent like a star or daisy similar to a bundle of pipes with very thin walls acting as flow rectifiers.

Hooks 3 and 4 are useful for application of a box that is thermally insulated with respect to body 1 able to contain all the means for sensing, processing and displaying the data whether the data are simply the number of turns of rotating body 5-6 or the data processed along with the data suplied by the probes immersed in the fluid.

The sensor of the number of rotations which is placed in cavity 4 can be an inductor, Hall cell, photocell, photodiode, r.f. oscillator, etc., depending on the characteristics of the most suitable electronic circuit.

On the periphery of one or more of the radial expansions of the propeller are placed the inductor elements of the signals that therefore cause one or more electric pulses for each rotation of the propeller.

They are small magnets 15 or capacitive plates or more simply whithe or bright surfaces reflecting the light or other means of connection between the rotor and sensor that occur through the bottom of cavity 4 which consists of an amagnetic or transparent or dielectric material, depending on the type of connection selected.

A metal band 17 having high magnetic permeability and high saturation induction encloses the central zone of pipe 1 in case of sensing the rotation with a magnetic system. It is not necessary if the mechanical body is of ferromagnetic material or if the sensing system is not electromagnetic.

Figure 2 shows the construction detail of a small-sized propeller 5 with four blades molded from thermoplastic by injection molding. The plastics used can be varied since they are used in small and medium flow rate flowmeters and for temperatures below $100^\circ$C.

Blades 5 and hollow hub 6 are obtained as a single unit, including in the molding also cover 20 for closing end 21 of the hub that is left open because of the need to remove the piece from the mold. Cover 20 is suitably applied by ultrasonic welding for reliability of the fluid-tight seal. The ends of the hub, preferably ogival in shape, end in the seat for thrust bearings 38 of jewels (sapphire, ruby) with a conical incision having a semispherical mirror-smooth bottom. They are mounted by pressure, the seat preferably being of plastic.

Figure 3 shows the variant of a high flow rate flowmeter, which at the site of the threading of both ends, has a flanging 23 of the two ends for attaching the conduits which are usually metal. Except for the two end flanges 23, static mechanical body 1 is similar to that with smaller dimensions.

Usually being used upstream from secondary branches and especially for remote heating stations it usually must support temperatures above 100°C and static high pressures.

In this case it is advisable that the rotating element in the fluid be metal since at these temperatures the plastics would be working close to their softening point and their variation in shape, even if expanded, would endanger the consistency of the monitored data.

Because of the greater physical size and therefore the greater lenght of pin 6 of the rotor, heat expansion at high temperatures has to be taken into account. For this purpose, flexible supports 25 are provided in the shape of an arc of a circle (for example, phosphor bronze plate) with the convexity turned outward, and with the development in length so that its expansion because of increased temperature produces, in the center, an elongation of the chamber of such magnitude as to correspond to the sudden elongation of the corresponding half pin for the same increase in temperature. The ends of elastic supports 25 are fitted by pressure in incisions 26 made on the inside of tubular body 1. Stationary tubular body 1, as in the case of the embodiment of figure 1, is provided with all the accessories already described, such as magnetic filters 14, mechanical filters 13, pockets for probes 9 and data sensors and hooks for a container 30 of the electrical and electronic circuit for processing and transmitting the monitored data.

Figure 4 illustrates, in a nonlimiting way, a simple and suitable construction of the rotating element when it is to be immersed in fluids at high temperatures. An example is given of a four-blade propeller solution: the propeller is made from a disk 31 obtained by stamping from a thin flat sheet of light metal that is resistant to corrosion and able to be welded or glued, as for example of an alloy of aluminum, titanium, etc.

Contour 1 is an arc of a circle if great sensitivity to minimal flow rates is not required, otherwise each blade is provided with a contour in an arc of ellipsis with parameters depending on the pitch it is desired to give the propeller.

In the phase of stamping the contour, four holes 33 are also made. A simple punch having cusps symmetrical with those of the die underneath provides four shear cuts corresponding to radii 1" going from the center of holes 33 and preliminary bending of the blades at a preset angle. The bending occurs by twisting of the thin segments 38 between each pair of holes 33.

Half pins 6, which are hollow on the inside and carry thrust bearings at their outside ends 36, are made like a turret with four identical points 6' on the two sides, so that when placed and pressed against the center of the blades that have already been bent into a propeller, one for each face, they fit perfectly between them, holding the blades in position and perfect inclination to permit fluid-tight welding or gluing at all points of contact of the profiles that fit together.

This process of making the rotating body is advantageous also because, by modifying only the tool for milling of cusps 6' and the diameter of the stamped disk, various types of rotating bodies having various pitches and various diameters can be obtained.

## Claims

1. Flowmeter with electronic sensing of data, suitable for measuring, with great precision and sensitivity, in a broad field of linear proportionality and in any position, direction and orientation that it is mounted, a wide range of fluid flow rates, also suitable for functioning as a dynamic calorimeter, characterized by a conduit consisting of a piece of pipe preferably straight in which a fan, with a pin coaxial with the flow, rotates, the specific weight of the fan is very close to or identical with that of the fluid to be measured, so as not to weigh heavy on the bearings that support the pin; means being provided to transmi to the outside of the pipe magnetic, electromagnetic, electric or optical pulses at each rotation of the fan.

2. Flowmeter as in claim 1, wherein said fan has radial bla des and inside the conduit, besides the cavity of the electrical, electromagnetic or electroluminous sensor, exhibits two laminar flow rectifiers in the shape of a daisy or star two gauze filters each containing a magnet functioning as a magnetic filter and two pockets carrying probes; said elements being arranged symmetrically so that sensing of the d ta is identical when the direction of flow of the fluid to be measured in the conduit is reversed.

3. Flowmeter as in claims 1 and 2, wherein the supports of the rotating body are made in the form of an arc of a circle concave toward the propeller having a radius calculated as a function of the index of thermal expansion of the mate rials from which both the arc and pin are made so that the variations in the chamber of each, due to thermal variation in the fluid, perfectly compensate the corresponding variations of length of the propeller pin.

4. Flowmeter as in claims 1 to 2, wherein hooks are provide to hold an outside container which can contain either the electrical or electronic circuit to operate either an internal or remote totalizer of the simple volume of the fluid that has passed, or to operate the same totalizer with the analog data provided by the rotation sensor and various probes, ahead of the data processed by this circuit.

5. Process for making the flowmeter as in claims 1, 2 and 3, wherein its rotating part is molded from thermoplastic by injection so that by a simple positioning of a punch of the die the volume of the part of the pin that is to be kept hollow is determined at will.

6. Process as in claim 5, wherein the radial expansions of the propeller are obtained by stamping of a metal sheet followed by an operation of simultaneous shearing and bending while two half pins are turned or stamped from metal and milled at one end with cusp profiles so that when placed against one another they are complementary, and when pressed against the center of the expansions, they produce a perfect centering and inclination during the final welding operation.

Fig.1

Fig. 2

Fig.3

Fig. 4